# FASCICULE DE BREVET EUROPEEN

(11) **EP 3 724 144 B1**
(45) Date de publication et mention de la délivrance du brevet: **24.11.2021**
(21) Numéro de dépôt: 18833940.2
(22) Date de dépôt: 13.12.2018
(51) Int. Cl.: C04B 7/44

(54) **INSTALLATION DE PRODUCTION DE CLINKER ET PROCÉDÉ DE PRODUCTION DE CLINKER DANS UNE TELLE INSTALLATION**
KLINKERPRODUKTIONSANLAGE UND VERFAHREN ZUR KLINKERHERSTELLUNG IN EINER SOLCHEN ANLAGE
CLINKER PRODUCTION FACILITY AND METHOD FOR PRODUCING CLINKER IN SUCH A FACILITY

(30) Priorité: 15.12.2017 FR 1762264
(43) Date de publication de la demande: 21.10.2020
(73) Titulaire: Fives FCB, 59650 Villeneuve d'Ascq (FR)
(72) Inventeur: CHARMET, Jean-Michel, 59650 VILLENEUVE D'ASCQ (FR); GUIMARD, Yannick, 59650 VILLENEUVE D'ASCQ (FR)
(74) Mandataire: Bureau Duthoit Legros Associés
(86) Numéro de dépôt international: PCT/FR2018/053281
(87) Numéro de publication internationale: WO 2019/115967

(56) Documents cités:
- WO-A1-2009/156614
- US-A1- 2009 283 015

## Description

L'invention concerne le domaine de la production de ciment, et plus précisément un procédé de production de clinker de ciment.

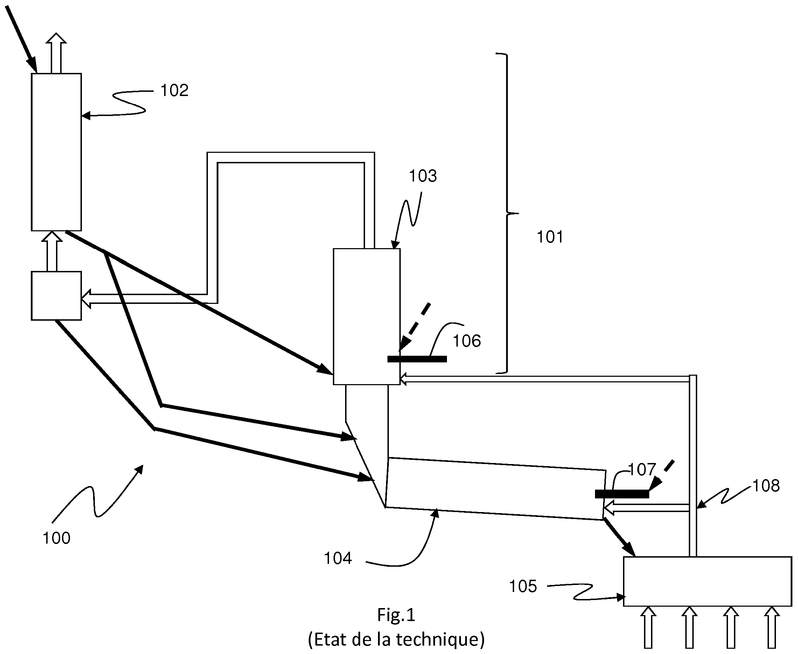

Sur la figure 1, il est représenté de manière schématique un exemple d'une installation 100 classique pour la production de clinker. L'installation 100 comprend un ensemble 101 de préchauffage et/ou de précalcination, comprenant généralement un préchauffeur 102 et un calcinateur 103, suivi d'un four 104 de clinkérisation et d'un refroidisseur 105. De la matière crue est alimentée en haut du préchauffeur 102. Le préchauffeur 102 comprend généralement des cyclones en série, traversés par la matière crue où elle est préchauffée. La matière préchauffée passe ensuite dans le calcinateur 103, où grâce à la température élevée, elle est majoritairement décarbonatée. Par exemple, un brûleur 106 peut être prévu dans le calcinateur 103. Puis, la matière en grande partie décarbonatée entre dans le four 104. Typiquement, le four 104 est de type rotatif, et comprend un brûleur 107. La matière cuit dans le four 104 : sa décarbonatation se poursuit, puis la matière est transformée en clinker. La matière cuite est ensuite refroidie dans le refroidisseur 105. A cet effet, le refroidisseur 105 comprend une entrée pour un fluide refroidisseur, en général de l'air.

L'air réchauffé par la matière dans le refroidisseur 105, contenant de l'oxygène, peut être récupéré pour être utilisé à différents endroits de l'installation 100 pour alimenter la combustion. Par exemple, une partie de cet air, appelée air secondaire, est récupérée pour être amenée dans le four 104, à proximité du brûleur 107 ; une autre partie, appelée air tertiaire, peut être amenée au calcinateur 103, à proximité du brûleur 106.

Les fumées du four 105 sont utilisées pour chauffer la matière avant que cette dernière n'entre dans le four 105. Plus précisément, les fumées du four rentrent dans le calcinateur 103. De l'air tertiaire, de la matière et un combustible sont également alimentés dans le calcinateur 103. Une réaction de combustion a alors lieu dans le calcinateur 103 où la matière est au moins en partie décarbonatée.

Les brûleurs 106 et 107 sont typiquement alimentés en un combustible dont les propriétés lui permettent de brûler rapidement une fois enflammé. Plus précisément, les propriétés du combustible sont adaptées au temps de séjour imposé par la conception et les dimensions du four 105 et du précalcinateur 103. Dès lors, un tel combustible est choisi pour que ce temps de séjour lui permette d'atteindre sa combustion complète avant que les fumées n'entrent dans le préchauffeur 2. Ainsi, le combustible se volatilise complètement, assurant un bon rendement, et seules les cendres résultantes, de nature minérale, se mélangent à la matière.

Les combustibles répondant à ces critères coûtent chers. En effet, ce sont en général des combustibles fossiles, sous forme pulvérulente, gazeuse ou liquide. Et la production de clinker requière une grande consommation de ces combustibles. En effet, on estime qu'il faut environ 100kg de combustible pour produire 1T de clinker.

Il est alors connu d'utiliser des combustibles dits alternatifs solides moins coûteux. Les combustibles alternatifs solides sont notamment des matériaux qui sont des déchets ou encore la biomasse. On peut citer par exemple les pneus, les pièces plastiques que l'on trouve dans les automobiles, les boues d'épuration, les déchets de bois et plus généralement tout déchet issu d'une industrie ou d'un commerce, voire des ménages.

Comparativement aux combustibles fossiles, les combustibles alternatifs solides sont disponibles en général sous forme grossière, avec des dimensions pouvant atteindre 500 mm. Ils sont donc plus difficilement transportables en l'état par un flux gazeux, car plus lourds, et ils mettent plus de temps à brûler, notamment du fait des dimensions plus importantes des particules des combustibles solides alternatifs et d'une surface spécifique moindre. En outre, en fonction de leurs origines, les combustibles grossiers alternatifs ont des propriétés à la combustion qui peuvent varier.

Un des problèmes dans l'utilisation des combustibles solides alternatifs est donc de les utiliser de manière optimale, en tirant un maximum de leur pouvoir calorifique, et en obtenant leur combustion complète à l'endroit voulu dans une installation de production de clinker.

Afin de permettre l'utilisation de tels combustibles dans une installation 100 de production de clinker de ciment répondant aux critères, il est connu de mettre en œuvre une étape préalable de déchiquetage des combustibles alternatifs solides afin de leur faire atteindre des dimensions compatibles avec leur utilisation. Cette solution n'est pas satisfaisante car la quantité d'énergie utilisée pour le déchiquetage et les coûts de maintenance des dispositifs de déchiquetage associés diminuent nettement l'intérêt d'utiliser des combustibles alternatifs.

Ainsi, il existe un besoin pour utiliser les combustibles alternatifs solides sous une forme la plus grossière possible, limitant les coûts de traitement de ces combustibles avant leur utilisation dans l'installation de production de clinker.

Plusieurs solutions ont été proposées dans l'état de la technique.

Une solution est de mettre en place un réacteur supplémentaire, dédié à la combustion de combustibles alternatifs solides. En général, le réacteur supplémentaire a pour but de brûler complètement les combustibles alternatifs avant que ces derniers n'atteignent le four de clinkérisation, de sorte que seules les cendres de la combustion, qui sont de nature minérale, arrivent dans le four. Ces cendres sont ensuite intégrées à la matière pour former le clinker.

Le document DE3320670 propose de mettre en place un tel réacteur de type four à lit fluidisé, afin de brûler les déchets, dans un procédé de production de clinker de ciment.

La solution proposée dans ce document n'apporte pas complète satisfaction, car sa mise en œuvre technologique se révèle compliquée. Notamment, la technologie du lit fluidisé ne permet pas d'utiliser des combustibles solides de toute dimension, non contrôlée, et notamment de grande dimension comme celle des combustibles solides alternatifs précités.

Le document DE3218232 propose de mettre en place un réacteur pour la combustion de déchets, les fumées générées par cette combustion étant amenées à l'entrée du préchauffeur. Les résidus de la combustion du combustible solide alternatif sont récupérés dans un silo pour être mélangés en aval du four de clinkérisation avec le clinker et du gypse en proportions ajustables pour obtenir du ciment. Ainsi, la qualité du ciment peut être ajustée également. Un tel système requiert toutefois une consommation d'énergie supérieure à celle nécessaire dans le procédé classique, décrit ci-dessus, de sorte qu'il est plus coûteux à mettre en œuvre. En effet, la chambre de combustion du four de pyrolyse nécessite un apport d'énergie supplémentaire.

Le document WO01/09548 propose de brûler les combustibles alternatifs dans un compartiment, comprenant un support rotatif permettant de régler le temps de séjour des combustibles. De l'air du refroidisseur est envoyé au compartiment afin de l'alimenter en oxygène. Les fumées du four sont directement envoyées au calcinateur, sans passer par ce compartiment.

Toutefois, le support rotatif ne permet pas de remuer suffisamment les combustibles pour éviter l'apparition de points chauds, de sorte que des problèmes d'exploitation peuvent apparaître.

Le document US6,626,662 décrit un réacteur de type tambour rotatif permettant de brûler un combustible alternatif grossier. A cet effet, le tambour rotatif est alimenté d'une part par de l'air tertiaire, c'est-à-dire l'air venant du refroidisseur, et d'autre part par de la matière crue et un combustible alternatif. Un autre combustible, facilement inflammable, est également introduit dans le tambour afin d'allumer le combustible alternatif. Le contrôle de la combustion est réalisé en faisant varier la quantité de matière crue introduite dans le tambour. Les résidus solides, comprenant de la matière crue précalcinée, peuvent être amenés soit directement à l'entrée du four de clinkérisation s'ils sont de taille importante, soit dans une branche ascendante d'un système de précalcination. Par conséquent, une partie de la matière est utilisée comme moyen de contrôle de la combustion du combustible alternatif dans le tambour rotatif.

Or, dans le four, l'azote et ses composés, apportés notamment par l'air primaire et l'air secondaire, et également par le combustible, ont tendance à s'oxyder et à former des oxydes d'azote (notés NOx) qui sont fortement polluants et dont les émissions atmosphériques sont limitées par la réglementation. De manière connue, les NOx contenus dans les fumées du four sont réduits dans les chambres de combustion de l'ensemble de précalcination.

Toutefois, aucune des installations de l'état de la technique ne propose de contrôler cette réduction.

On connaît encore du document US 2009/0283015 un procédé et un dispositif de calcination convenant pour utiliser un combustible alternatif dans le cadre de la fabrication de clinker de ciment.

Dans ce dispositif de calcination du type à flux entraîné, du combustible classique (non grossier et non alternatif) est alimenté aux points d'injection repérés 12, l'air nécessaire à la combustion provenant de l'air tertiaire, le flux de gaz d'entrainement provenant des fumées du four d'une installation de fabrication de clinker de ciment.

Ce dispositif permet en complément de fonctionner avec un combustible alternatif, par une vis sans fin traversant la paroi d'une conduite verticale du dispositif, et alimente réacteur de calcination dédié au combustible alternatif, comprenant une chambre de combustion formée par une pelle, saillante de la paroi vers le centre, formant obstacle au flux de gaz ascendant issu des fumées du four. Un système d'alimentation en air de combustion, volontairement distinct de celui assurant la combustion du combustible classique (et utilisant de l'air tertiaire) comprend des buses, repérées 19, en fond de pelle, destinées implicitement à assurer une certaine fluidisation du combustible alternatif dans la cavité formant la chambre de combustion.

WO2009/156615 décrit une installation de production de clinker de sorte qu'au moins une partie des fumées de combustion du four traverse au moins en partie le réacteur de calcination avant de rentrer dans l'ensemble de préchauffage, un flux gazeux tertiaire comprenant au moins en partie de l'air sortant du refroidisseur traverse au moins en partie le réacteur de calcination avant de rentrer dans l'ensemble de préchauffage

Selon les constatations de la Demanderesse, en raison des pertes charges générées par les buses du système d'alimentation nécessaire à la fluidisation du combustible alternatif, il est nécessaire de pousser l'air (par utilisation de ventilateurs, surpresseurs ; ou équivalents), ces appareils présentant des limites de fonctionnement en température, typiquement de l'ordre de 400°C, à savoir une température bien inférieure à celle de l'air tertiaire. En définitive une telle conception interdit d'utiliser un air plus chaud, (tel que l'air tertiaire) pour assurer la combustion du combustible alternatif. La fluidisation nécessaire à la combustion du combustible dans la chambre impose par ailleurs un certain débit de fonctionnement, interdisant tout réglage de l'air assurant la combustion du combustible alternatif, et en vue d'obtenir une réduction des NOx. Une telle conception n'est pas non plus optimale, s'agissant de la réduction des NOx produits par le four.

Il existe donc un besoin pour une nouvelle installation de production de clinker de ciment utilisant des combustibles alternatifs surmontant en particulier les inconvénients précités.

A cet effet, un premier objet de l'invention est d'utiliser des combustibles alternatifs solides grossiers dans une installation de production de clinker de ciment en contrôlant leur combustion.

Un deuxième objet de l'invention est d'utiliser des combustibles alternatifs solides grossiers dans une installation de production de clinker de ciment en optimisant les coûts énergétiques.

Un troisième objet de l'invention est d'utiliser des combustibles alternatifs solides grossiers dans une installation de production de clinker de ciment augmentant la maîtrise sur l'apparition des polluants.

Un quatrième objet de l'invention est d'utiliser des combustibles alternatifs solides grossiers dans une installation de production de clinker de ciment en optimisant l'utilisation de leur pouvoir calorifique.

Un cinquième objet de l'invention est d'utiliser des combustibles alternatifs solides grossiers dans une installation de production de clinker de ciment qui n'augmente pas les coûts de production.

Un sixième objet de l'invention est d'utiliser des combustibles alternatifs solides grossiers dans une installation de production de clinker de ciment qui ne dégrade pas la qualité du ciment fabriqué à partir du clinker obtenu dans cette installation.

Ainsi, selon un premier aspect, l'invention propose une installation de production de clinker comprenant :
- un ensemble de préchauffage, dans lequel de la matière crue est préchauffée ;
- un ensemble de calcination, dans lequel la matière crue préchauffée est au moins en partie décarbonatée ;
- un four dans lequel la matière crue préchauffée et au moins en partie décarbonatée est cuite ;
- un refroidisseur dans lequel la matière cuite du four est refroidie par de l'air de refroidissement.

L'ensemble de calcination comprend un réacteur de calcination par combustion d'un combustible solide dit alternatif. Ledit réacteur de calcination est disposé, selon le sens de circulation des gaz, entre d'une part l'ensemble de préchauffage et d'autre part le four, et est connecté au refroidisseur de sorte que :
- au moins une partie des fumées de combustion du four traverse au moins en partie le réacteur de calcination avant de rentrer dans l'ensemble de préchauffage,
- un flux gazeux tertiaire comprenant au moins en partie de l'air sortant du refroidisseur traverse au moins en partie le réacteur de calcination avant de rentrer dans l'ensemble de préchauffage.

Le réacteur de calcination comprend en outre un système de réglage du temps de séjour du combustible solide alternatif dans le réacteur de calcination.

L'installation permet de brûler des combustibles alternatifs solides de dimensions supérieures à celles des combustibles solides usuellement utilisés dans le four ou dans l'ensemble de calcination, tout en apportant un contrôle sur la réduction des NOx contenus dans les fumées du four qui traversent le réacteur de calcination.

A cet effet, un système d'ajustement du débit de flux tertiaire est configuré pour assurer, dans le réacteur de calcination, un équilibre entre l'alimentation en oxygène nécessaire à la réaction de combustion, et la réduction des NOx contenus dans les fumées du four.

Par exemple, le réacteur de calcination est un four rotatif, le système de réglage du temps de séjour du combustible solide alternatif étant un système de réglage de la vitesse de rotation et/ou de la pente du réacteur de calcination.

Le combustible alternatif solide peut être un combustible solide comprenant des particules dont une dimension caractéristique est supérieure à 20mm, diminuant les coûts en énergie requise dans une opération de déchiquetage.

L'installation peut alors s'adapter facilement à différents types de combustible, outre les combustibles solides alternatifs grossiers.

Ainsi, selon un mode de réalisation, l'ensemble de calcination peut-il comprendre de plus un réacteur supplémentaire de calcination alimenté en un combustible. Le réacteur supplémentaire de calcination est disposé entre le réacteur de calcination et l'ensemble de préchauffage, de sorte qu'au moins une partie des fumées sortant du réacteur de calcination traverse le réacteur supplémentaire de calcination avant d'entrer dans l'ensemble de préchauffage. Le réacteur supplémentaire est ainsi particulièrement adapté pour utiliser des combustibles classiques lorsque ceux-ci sont disponibles à l'approvisionnement de l'installation.

Selon un mode de réalisation, l'ensemble de calcination peut également comprendre un réacteur auxiliaire de calcination, alimenté en un combustible, le réacteur auxiliaire étant connecté au refroidisseur en amont du réacteur de calcination, de sorte que le flux gazeux tertiaire alimentant le réacteur de calcination comprend au moins une partie des fumées sortant du réacteur auxiliaire. Un tel réacteur auxiliaire permet d'utiliser des combustibles qui sont difficiles à enflammer.

Selon un deuxième aspect, l'invention propose un procédé de production de clinker dans une installation telle que présentée ci-dessus, le procédé comprenant :
- le préchauffage de la matière crue dans l'ensemble de préchauffage ;
- la décarbonatation de la matière préchauffée dans l'ensemble de calcination ;
- la cuisson dans le four de la matière préchauffée et décarbonatée ;
- le refroidissement dans le refroidisseur de la matière cuite, le refroidissement étant effectué à l'aide d'air de refroidissement.

Le procédé comprend en outre :
- l'alimentation du réacteur de calcination en au moins une partie des fumées du four et en un flux gazeux tertiaire comprenant au moins une partie de l'air de refroidissement sortant du refroidisseur ;
- la combustion dans le réacteur de calcination d'un combustible solide alternatif et le réglage du temps de séjour du combustible solide alternatif dans le réacteur de calcination ;
- la récupération des fumées du réacteur de calcination pour alimenter l'ensemble de préchauffage.

Le combustible alternatif solide peut être un combustible solide comprenant des particules dont une dimension caractéristique est supérieure à 20mm, voire même supérieure à 80mm.

On contrôle le flux gazeux tertiaire arrivant au réacteur de calcination de manière à obtenir un équilibre entre l'alimentation en oxygène nécessaire à la réaction de combustion, et la réduction des NOx produits au four.

D'autres effets et avantages de l'invention apparaîtront à la lumière de la description de modes de réalisation accompagnée des figures dans lesquelles :
La figure 1 est un schéma illustrant une installation de production de clinker de ciment selon un mode de réalisation de l'état de la technique ;
La figure 2 est un schéma représentant une installation de production de clinker de ciment selon un premier mode de réalisation de l'invention ;
La figure 3 est un schéma représentant une installation de production de clinker de ciment selon un deuxième mode de réalisation de l'invention ;
La figure 4 est un schéma représentant une installation de production de clinker de ciment selon un troisième mode de réalisation de l'invention ;
La figure 5 est un schéma représentant une installation de production de clinker de ciment selon un quatrième mode de réalisation de l'invention.
La figure 1, qui représente un état de la technique, a déjà été décrite ci-dessus.

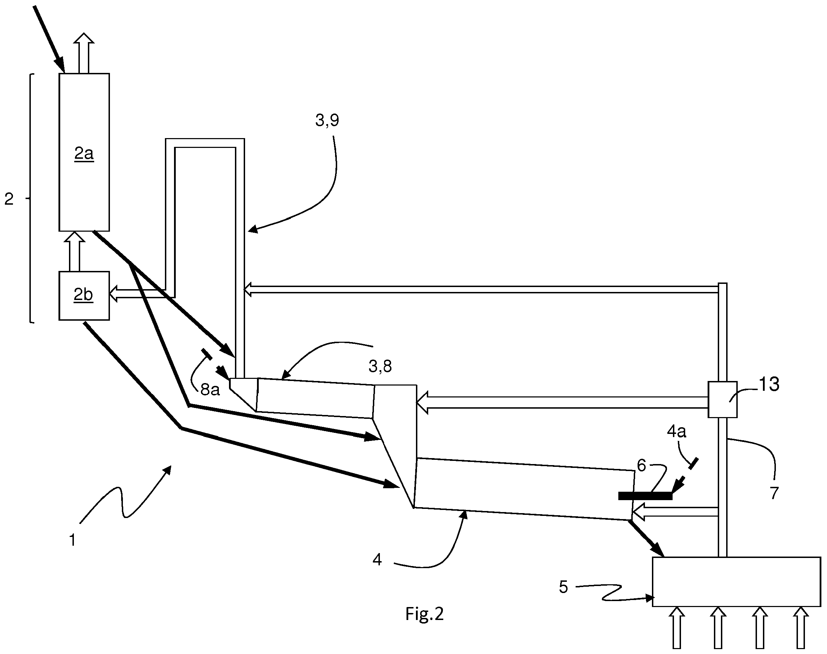

Sur les figures 2 à 5, il est représenté quatre modes de réalisation d'une installation 1 de production de clinker de ciment.

De manière classique, et en suivant globalement le sens de circulation de la matière, l'installation 1 comprend :
- un ensemble 2 de préchauffage dans lequel de la matière crue est préchauffée et au moins en partie décarbonatée ;
- un ensemble 3 de calcination, dans lequel la matière crue préchauffée est au moins en partie décarbonatée ;
- un four 4 dans lequel la matière crue préchauffée et au moins en partie décarbonatée est cuite ;
- un refroidisseur 5 dans lequel la matière cuite du four 4 est refroidie par de l'air de refroidissement.

Plus précisément, l'ensemble 2 de préchauffage comprend une pluralité de cyclones, par exemple cinq, disposés en série, dans lesquels la matière est emportée de cyclone en cyclone par un gaz vecteur venant de l'ensemble 3 de calcination. Sur les figures 2 à 5, on a représenté l'ensemble 2 de préchauffage par un premier bloc 2a représentant les premiers cyclones, et par un deuxième bloc 2b représentant le ou les derniers cyclones, afin de faciliter la description qui va suivre.

Le four 4 est par exemple un four rotatif, l'avancement de la matière dans le four 4 jusqu'au refroidisseur 5 étant contrôlée par la rotation et/ou l'inclinaison du four 4. Un brûleur 6 est prévu dans le four 4, du côté opposé à l'arrivée de la matière dans le four 4. Ce brûleur est alimenté par un combustible 4a classique, c'est-à-dire par un combustible fossile ou par un combustible alternatif sous forme liquide ou gazeuse, ou encore par un combustible alternatif solide traité de manière à présenter des dimensions caractéristiques de particules inférieures à 20 mm. La flamme du four générée par le brûleur 6 est alimentée en air dit primaire, c'est-à-dire de l'air extérieur à l'installation injecté via le brûleur 6, et est également alimentée par de l'air dit secondaire, c'est-à-dire de l'air réchauffé sortant du refroidisseur 5.

A cet effet, le refroidisseur 5 comprend une entrée en air de refroidissement. Cet air est réchauffé par la matière cuite et chaude avec laquelle il entre en contact dans le refroidisseur. Afin de profiter de cet air réchauffé, celui-ci est récupéré et envoyé pour partie au four 4 en tant qu'air secondaire. Il peut également être envoyé pour une autre partie à l'ensemble 3 de calcination en tant qu'air tertiaire.

Comme représenté sur les figures 2 à 5, l'air secondaire et l'air tertiaire sont pris au même endroit, en l'occurrence au capot de chauffe, sur le refroidisseur 5, de sorte qu'une unique gaine 7 de distribution amène l'air secondaire et l'air tertiaire. Il peut bien évidemment en être autrement, la prise d'air tertiaire pouvant se faire à un endroit sur le refroidisseur 5 où l'air de refroidissement réchauffé est moins chaud que pour l'air secondaire pris au capot de chauffe.

Selon l'invention, l'ensemble 3 de calcination comprend un réacteur 8 de calcination qui est disposé entre le four 4 et le préchauffeur 2 selon le sens de circulation des fumées dans l'installation 1, de sorte qu'au moins une partie, et de préférence la totalité, des fumées sortant du four entrent dans le réacteur 8 de calcination avant de rentrer dans l'ensemble de préchauffage 2.

Dans ce qui suit, les positions des équipements, et en particulier, les termes amont et « aval », devront être compris, sauf indication contraire, par rapport au sens de circulation des gaz dans l'installation 1.

Le réacteur 8 de calcination peut comprendre, mais non nécessairement, un brûleur. Toutefois, les fumées du four 4 sont en général suffisamment chaudes, à une température de l'ordre de 1100°C, pour apporter l'énergie nécessaire à la combustion du combustible solide alternatif grossier dans le réacteur 8. Le recyclage de l'énergie des fumées du four 4 dans le réacteur 8 de calcination diminue ainsi les coûts en énergie de l'installation 1.

Le réacteur 8 de calcination est également connecté, directement ou indirectement, à la gaine 7 de distribution, de sorte qu'il est alimenté par un flux gazeux dit tertiaire venant du refroidisseur 5. Plus précisément, comme cela sera explicité plus loin, le flux gazeux tertiaire comprend au moins en partie de l'air tertiaire. Ce flux tertiaire apporte l'oxygène nécessaire à la réaction de combustion.

Le réacteur 8 de calcination comprend une arrivée 8a pour un combustible. Conformément à l'invention, il s'agit d'un combustible solide alternatif grossier. Par « grossier » on désigne ici une granulométrie supérieure à celle des combustibles solides utilisés habituellement. Notamment, un combustible solide alternatif grossier comprend ici des particules dont au moins une dimension caractéristique est supérieure ou égale 20mm (millimètres), et de préférence supérieure ou égale à 80mm. Les particules du combustible solide alternatif grossier injectées dans le réacteur 8 de calcination peuvent atteindre des dimensions caractéristiques de l'ordre de 500 mm, de sorte qu'une éventuelle opération préalable de déchiquetage implique des coûts très nettement inférieurs par rapport aux opérations de déchiquetage mentionnées dans l'introduction pour l'état de la technique.

Le réacteur 8 de calcination comprend en outre un système de réglage du temps de séjour du combustible solide alternatif grossier : le temps de séjour est réglé de sorte que le combustible est totalement consumé, de sorte que seuls des résidus minéraux tombent dans le four 4 et se mélangent à la matière.

Selon un mode de réalisation particulier, qui est celui des figures, le réacteur 8 de calcination est un four rotatif. Le temps de séjour du combustible peut alors être réglé par deux paramètres : l'inclinaison du réacteur 8 et la vitesse de rotation. L'alimentation en combustible solide alternatif grossier dans le réacteur 8 de calcination se fait alors de préférence du côté le plus haut, de sorte que le combustible a toute la longueur du réacteur 8 de calcination pour se consumer et que seules des cendres arrivent au point le plus bas du réacteur 8 de calcination, avant de tomber dans le four 4 de clinkérisation.

Le système de réglage du temps de séjour du combustible permet d'adapter le temps de séjour notamment en fonction de la nature du combustible solide alternatif grossier fourni. En effet, le combustible solide alternatif grossier peut avoir différentes origines, et donc des propriétés à la combustion qui sont différentes en fonction des lots. La taille des particules constituant le combustible solide alternatif peut également varier en fonction des origines. Il est donc avantageux de pouvoir régler le temps de séjour dans le réacteur 8 de calcination afin de toujours obtenir la combustion complète du combustible alternatif grossier.

De préférence, le débit de flux tertiaire est ajusté de manière à obtenir un équilibre entre l'alimentation en oxygène nécessaire à la réaction de combustion, et la nécessité de réduire les NOx produits au four 4.

En effet, les conditions dans le four 4 sont favorables à l'apparition des NOx, fortement polluants. Afin de réduire les NOx, et éviter davantage leur apparition dans le réacteur 8 de calcination, la quantité d'oxygène arrivant par le flux tertiaire est contrôlée.

De préférence, les fumées du four 4 et le flux d'air tertiaire se mélangent en amont ou à l'entrée du réacteur 8 de calcination, de sorte que le mécanisme de réduction des NOx des fumées sortant du four 4 est contrôlé par le débit de flux tertiaire. La quantité de NOx sortant de l'installation 1 est ainsi avantageusement limitée. Le réglage de la proportion du flux tertiaire alimentant le réacteur 8 de calcination est tel que le combustible alternatif est soumis dans le réacteur aux hautes températures des fumées provenant du four, afin de provoquer tout d'abord au moins la volatilisation partielle du combustible alternatif, en atmosphère réductrice, et ainsi la libération de produits de pyrolyse (provenant du combustible alternatif) qui se recombinent par réaction avec le NO pour être transformés en N2, et assurant ainsi la réduction des NOx.

La combustion du combustible alternatif est ensuite assurée dans ce même réacteur 8 de calcination par l'oxygène provenant de l'air tertiaire. Le réacteur 8 de calcination permet ainsi de combiner à la fois le contrôle de la combustion d'un combustible solide alternatif grossier et le contrôle de la réduction des NOx contenus dans les fumées du four 4.

A cet effet l'installation comprend un système d'ajustement 13 du débit de flux tertiaire, qui peut comprendre des registres de réglage et/clapets, afin de contrôler la proportion d'air tertiaire arrivant au réacteur 8 de calcination.

Ce système d'ajustement 13 est configuré pour assurer, dans le réacteur de calcination, une atmosphère légèrement réductrice permettant à la fois une combustion correcte des combustibles alternatifs solides et la réduction des NOx produits par le four.

Quatre modes de réalisation de l'invention vont maintenant être décrits en détails.

Selon un premier mode de réalisation illustré sur la figure 2, le flux tertiaire comprend uniquement de l'air tertiaire, le réacteur 8 de calcination étant directement connecté à la gaine 7 de distribution.

Le réacteur 8 de calcination est suivi, en aval dans le sens de circulation des gaz, d'une gaine 9 appelée col de cygne, dans laquelle la calcination de la matière se poursuit sous l'effet de la chaleur résiduelle dans les gaz traversant le col de cygne 9. Eventuellement, comme représenté sur la figure 2, de l'air tertiaire peut être amené dans le col de cygne 9 afin d'alimenter la combustion. Le système d'ajustement 13 permet de régler la proportion d'air tertiaire acheminée à l'entrée du réacteur 8 de calcination, et la proportion restante acheminée en aval, par exemple un peu plus loin dans le réacteur 8 de calcination, voire même en aval du réacteur 8 de calcination, tel que par exemple dans le col de cygne 9, et comme représenté à la figure 2.

Plus précisément, de la matière sortant du premier bloc 2a du préchauffeur 2 est mise en suspension dans le flux gazeux ascendant circulant dans le col de cygne 9. Cette matière est transportée par les fumées et gaz venant du four 4 et du réacteur 8 de calcination, jusqu'au deuxième bloc 2b du préchauffeur 2. Puis, la matière est envoyée à l'entrée du four 4 de clinkérisation.

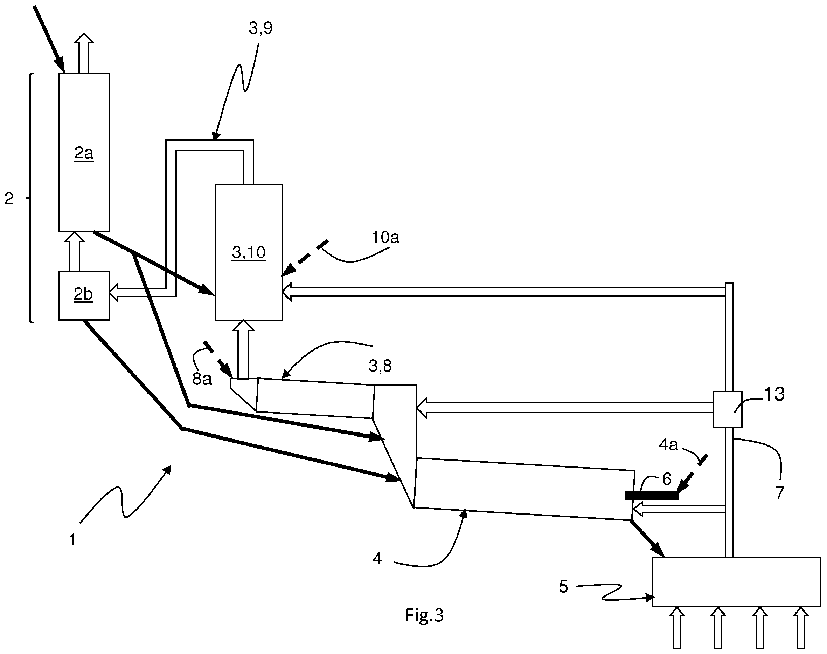

Selon un deuxième mode de réalisation illustré sur la figure 3, par rapport au premier mode de réalisation, l'ensemble 3 de calcination comprend un réacteur 10 supplémentaire de calcination, entre le réacteur 8 de calcination et le col de cygne 9. Ainsi, les fumées sortant du réacteur 8 de calcination entrent, au moins en partie et de préférence entièrement, dans le réacteur 10 supplémentaire, traversent le col de cygne 9 et entrent dans le préchauffeur 2. Le réacteur 10 supplémentaire comprend notamment une entrée 10a pour un combustible classique comme défini précédemment. Une arrivée d'air tertiaire peut également être prévue dans le réacteur 10 supplémentaire pour alimenter la combustion. Ce réacteur 10 supplémentaire permet donc de consommer des combustibles classiques lorsque ceux-ci sont disponibles pour compléter l'apport d'énergie nécessaire pour atteindre le niveau visé de décarbonatation de la matière.

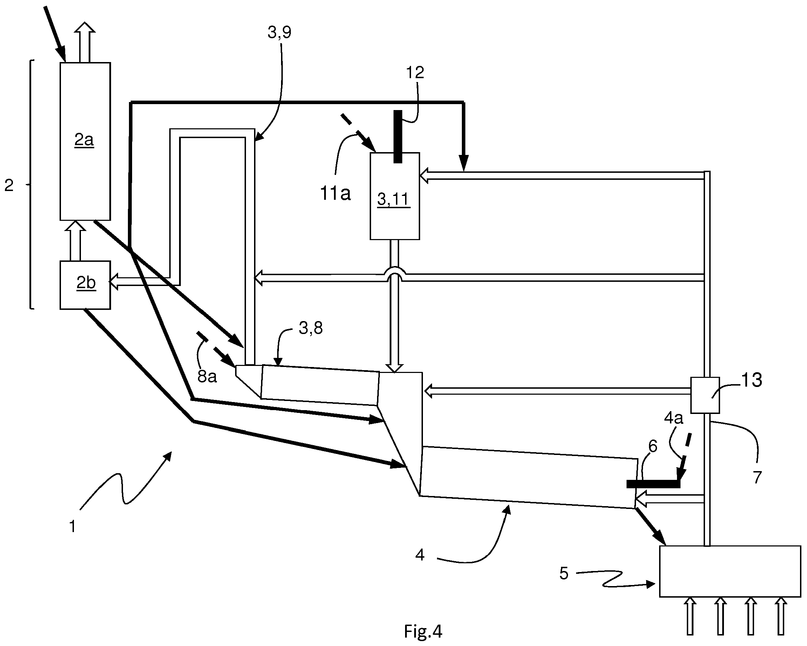

Selon un troisième mode de réalisation illustré sur la figure 4, par rapport au premier mode de réalisation, l'ensemble 3 de calcination comprend un réacteur 11 auxiliaire, connecté à la gaine 7 de distribution, en amont du réacteur 8 de calcination selon le sens de circulation des gaz. Un brûleur 12 permet d'enflammer un combustible alimentant en 11a le réacteur 11 auxiliaire.

Par exemple, lorsque le combustible disponible est difficile à s'enflammer, notamment parce qu'il contient peu de matière volatile, il est préférable d'allumer le combustible dans un tel réacteur 11 auxiliaire dédié, dans lequel l'énergie et la quantité d'oxygène, contenu dans l'air tertiaire arrivant par la gaine 7 de distribution, qui sont nécessaires à la combustion, sont apportées pour assurer une combustion stable et maîtrisée.

Les gaz sortant du réacteur 11 auxiliaire, mélange des fumées de combustion et de l'air tertiaire, forment alors le flux gazeux tertiaire qui est envoyé à l'entrée du réacteur 8 de calcination, où il se mélange avec les fumées du four 4.

Comme pour le premier mode de réalisation, les fumées sortant du réacteur 8 de calcination traversent un col de cygne 9, emmenant la matière à calciner, puis arrivent au préchauffeur 2 où elles préchauffent la matière avant de sortir de l'installation 1.

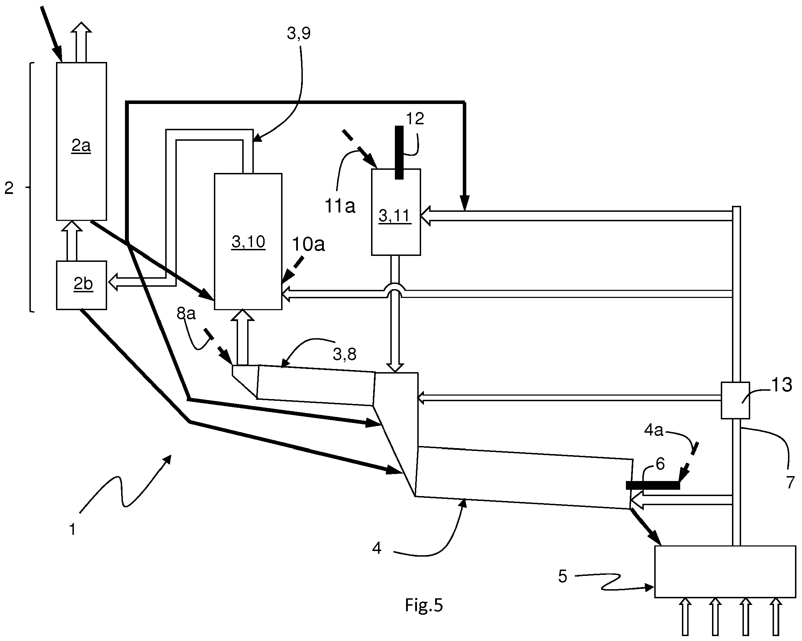

Selon un quatrième mode de réalisation, illustré sur la figure 5, l'installation comprend un réacteur 10 supplémentaire de calcination selon le deuxième mode de réalisation, et un réacteur 11 auxiliaire de calcination selon le troisième mode de réalisation, afin de combiner leurs effets et avantages.

L'installation 1 de production de clinker ainsi décrite offre une grande souplesse dans l'utilisation des combustibles. En effet, en fonction de la nature et de l'origine des combustibles disponibles pour l'installation 1, les différents réacteurs 8, 10 et 11 peuvent être mis en œuvre, en adaptant les proportions des différents combustibles et de matière arrivant aux réacteurs 8, 10 et 11 en fonction des besoins en énergie.

L'installation 1 ainsi décrite permet notamment d'utiliser des combustibles solides alternatifs sous forme grossière dans un procédé de fabrication du clinker de ciment, sans étape préalable de déchiquetage du combustible, de manière efficace grâce notamment au contrôle du temps de séjour du combustible dans le réacteur 8 de calcination, et grâce à l'utilisation des fumées du four 4 de clinkérisation et de l'air tertiaire du refroidisseur 7.

L'installation 1 permet en outre de limiter le recours à une étape de nettoyage pour retirer les NOx contenus dans les fumées du four. En effet, la position du réacteur 8 de calcination sur le chemin des fumées du four 4, combinée au contrôle de l'apport en oxygène au réacteur 8 de calcination, créée des conditions adéquates pour obtenir une réaction de réduction des NOx.

La quantité d'énergie consommée par l'installation 1 est ainsi peu voire pas augmentée par l'introduction de combustibles solides alternatifs grossiers. Le pouvoir calorifique des combustibles solides alternatifs grossiers est efficacement exploité. Les coûts de production de clinker sont diminués.

## Revendications

1. Installation (1) de production de clinker comprenant :
- un ensemble (2) de préchauffage, dans lequel de la matière crue est préchauffée ;
- un ensemble (3) de calcination, dans lequel la matière crue préchauffée est au moins en partie décarbonatée ;
- un four (4) dans lequel la matière crue préchauffée et au moins en partie décarbonatée est cuite ;
- un refroidisseur (5) dans lequel la matière cuite du four est refroidie par de l'air de refroidissement ;
installation dans laquelle l'ensemble de calcination comprend un réacteur (8) de calcination apte à la combustion d'un combustible solide dit alternatif aux combustible fossiles, notamment de matériaux qui sont des déchets ou encore de la biomasse, le réacteur (8) de calcination étant disposé, selon le sens de circulation des gaz, entre d'une part l'ensemble (2) de préchauffage et d'autre part le four (4), et étant connecté au refroidisseur (5) de sorte que :
- au moins une partie des fumées de combustion du four (4) traverse au moins en partie le réacteur (8) de calcination avant de rentrer dans l'ensemble (2) de préchauffage,
- un flux gazeux tertiaire comprenant au moins en partie de l'air sortant du refroidisseur (5) traverse au moins en partie le réacteur (8) de calcination avant de rentrer dans l'ensemble (2) de préchauffage,
et dans laquelle le réacteur (8) de calcination comprend un système de réglage du temps de séjour du combustible solide alternatif dans le réacteur (8) de calcination,
l'installation comprenant un système d'ajustement (13) du débit de flux tertiaire configuré pour assurer, dans le réacteur (8) de calcination, un équilibre entre l'alimentation en oxygène nécessaire a la réaction de combustion, et la réduction des NOx produits au four (4).

2. Installation (1) selon la revendication 1, dans laquelle le réacteur (8) de calcination est un four rotatif, le système de réglage du temps de séjour du combustible solide alternatif étant un système de réglage de la vitesse de rotation et/ou de la pente du réacteur (8) de calcination.

3. Installation (1) selon l'une quelconque des revendications précédentes, dans laquelle l'ensemble (2) de préchauffage comprend au moins un préchauffeur a cyclones.

4. Installation selon l'une quelconque des revendications précédentes, dans laquelle l'ensemble (3) de calcination comprend de plus un réacteur (10) supplémentaire de calcination alimenté en un combustible, le réacteur (10) supplémentaire de calcination étant disposé entre le réacteur (8) de calcination et l'ensemble (2) de préchauffage selon le sens de circulation des gaz, de sorte qu'au moins une partie des fumées sortant du réacteur (8) de calcination traverse le réacteur (10) supplémentaire de calcination avant d'entrer dans l'ensemble (2) de préchauffage.

5. Installation (1) selon l'une quelconque des revendications précédentes, dans laquelle l'ensemble (3) de calcination comprend de plus un réacteur (11) auxiliaire de calcination, alimenté en un combustible, le réacteur (11) auxiliaire étant connecté au refroidisseur(5) en amont du réacteur (8) de calcination selon le sens de circulation des gaz, de sorte que le flux gazeux tertiaire alimentant le réacteur (8) de calcination comprend au moins une partie des fumées sortant du réacteur (11) auxiliaire.

6. Procédé de production de clinker dans une installation (1) selon l'une quelconque des revendications précédentes, le procédé comprenant :
- le préchauffage de la matière crue dans l'ensemble (2) de préchauffage ;
- la décarbonatation de la matière préchauffée dans l'ensemble (3) de calcination ;
- la cuisson dans le four (4) de la matière préchauffée et décarbonatée ;
- le refroidissement dans le refroidisseur de la matière cuite, le refroidissement étant effectué à l'aide d'air de refroidissement ;
le procédé comprenant en outre :
- l'alimentation du réacteur (8) de calcination en au moins une partie des fumées du four (4) et en un flux gazeux tertiaire comprenant au moins une partie de l'air de refroidissement sortant du refroidisseur (5) ;
- la combustion dans le réacteur (8) de calcination d'un combustible solide alternatif et le réglage du temps de séjour du combustible solide alternatif dans le réacteur (8) de calcination ;
- la récupération des fumées du réacteur (8) de calcination pour alimenter l'ensemble (2) de préchauffage
- le contrôle du flux gazeux tertiaire arrivant au réacteur de calcination (8) de manière à obtenir un équilibre entre l'alimentation en oxygène nécessaire à la réaction de combustion, et la réduction des NOx produits au four (4).

7. Procédé selon la revendication 6 dans lequel le combustible alternatif solide est un combustible solide comprenant des particules dont une dimension caractéristique est supérieure a 20mm.

8. Procédé selon la revendication 6 dans lequel le combustible alternatif solide est un combustible solide comprenant des particules dont une dimension caractéristique est supérieure a 80mm.

## Patentansprüche

1. Klinkerproduktionsanlage (1), umfassend:
- eine Vorheizeinheit (2), in der das Rohmaterial vorerhitzt wird;
- eine Kalzinierungseinheit (3), in der das vorerhitzte Rohmaterial zumindest teilweise entkarbonisiert wird;
- einen Ofen (4), in dem das vorerhitzte und zumindest teilweise entkarbonisierte Rohmaterial gebrannt wird;
- einen Kühler (5), in dem das gebrannte Material aus dem Ofen durch Kühlluft gekühlt wird;
wobei bei der Anlage die Kalzinierungseinheit einen Kalzinierungsreaktor (8) umfasst, der für die Verbrennung eines so genannten zu den fossilen Brennstoffen alternativen Brennstoffes geeignet ist, insbesondere von Materialien, die Abfälle sind, oder von Biomasse,
wobei der Kalzinierungsreaktor (8) in Gaszirkulationsrichtung zwischen einerseits der Vorheizeinheit (2) und andererseits dem Ofen (4) angeordnet und an den Kühler (5) angeschlossen ist, so dass:
- mindestens ein Teil der Brenngase aus dem Ofen (4) mindestens teilweise durch den Kalzinierungsreaktor (8) strömt, bevor er wieder in die Vorheizeinheit (2) gelangt,
- ein tertiärer Gasstrom, umfassend teilweise die aus dem Kühler (5) austretende Luft, mindestens teilweise durch den Kalzinierungsreaktor (8) strömt, bevor er wieder in die Vorheizeinheit (2) gelangt,
und wobei der Kalzinierungsreaktor (8) ein System zur Einstellung der Aufenthaltszeit des alternativen festen Brennstoffes im Kalzinierungsreaktor (8) umfasst,
wobei die Anlage ein System zur Anpassung (13) der Menge an tertiärem Strom umfasst, das eingerichtet ist, um in dem Kalzinierungsreaktor (8) ein Gleichgewicht zwischen der für die Verbrennungsreaktion notwendigen Sauerstoffversorgung und der im Ofen (4) erzeugten Reduktion der NOx zu gewährleisten.

2. Anlage (1) nach Anspruch 1, bei der der Kalzinierungsreaktor (8) ein Drehofen ist, wobei das System zur Einstellung der Aufenthaltszeit des alternativen festen Brennstoffes ein System zur Einstellung der Rotationsgeschwindigkeit und/oder des Gefälles des Kalzinierungsreaktors (8) ist.

3. Anlage (1) nach einem der vorhergehenden Ansprüche, bei der die Vorheizeinheit (2) mindestens einen Zyklon-Vorerhitzer umfasst.

4. Anlage nach einem der vorhergehenden Ansprüche, bei der die Kalzinierungseinheit (3) ferner einen zusätzlichen Kalzinierungsreaktor (10) umfasst, der mit einem Brennstoff versorgt wird, wobei der zusätzliche Kalzinierungsreaktor (10) zwischen dem Kalzinierungsreaktor (8) und der Vorheizeinheit (2) in Gaszirkulationsrichtung angeordnet ist, so dass mindestens ein Teil der aus dem Kalzinierungsreaktor (8) austretenden Brenngase durch den zusätzlichen Kalzinierungsreaktor (10) strömt, bevor er wieder in die Vorheizeinheit (2) gelangt.

5. Anlage (1) nach einem der vorhergehenden Ansprüche, bei der die Kalzinierungseinheit (3) ferner einen Kalzinierungshilfsreaktor (11) umfasst, mit einem Brennstoff versorgt wird. Wobei der Hilfsreaktor (11) an den Kühler (5) stromaufwärts zum Kalzinierungsreaktor (8) in Gaszirkulationsrichtung angeschlossen ist, so dass der tertiäre Gasstrom, der den Kalzinierungsreaktor (8) versorgt, mindestens einen Teil der aus dem Hilfsreaktor (11) austretenden Brenngase umfasst.

6. Verfahren zur Klinkerherstellung in einer Anlage (1) nach einem der vorhergehenden Ansprüche, wobei das Verfahren umfasst:
- das Vorerhitzen des Rohmaterials in der Vorheizeinheit (2);
- das Entkarbonisieren des vorerhitzten Materials in der Kalzinierungseinheit (3);
- das Brennen des vorerhitzten und entkarbonisierten Materials im Ofen (4);
- das Kühlen des gebrannten Materials im Kühler, wobei das Kühlen mit Hilfe von Kühlluft erfolgt;
wobei das Verfahren ferner umfasst:
- die Versorgung des Kalzinierungsreaktors (8) mit mindestens einem Teil der Brenngase aus dem Ofen (4) und mit einem tertiären Gasstrom, umfassend mindestens einen Teil der aus dem Kühler (5) austretenden Kühlluft;
- das Verbrennen eines alternativen festen Brennstoffes im Kalzinierungsreaktor (8) und die Einstellung der Aufenthaltszeit des alternativen festen Brennstoffes im Kalzinierungsreaktor (8);
- die Wiedergewinnung der Brenngase aus dem Kalzinierungsreaktor (8), um die Vorheizeinheit (2) zu versorgen,
- die Kontrolle des am Kalzinierungsreaktor (8) ankommenden tertiären Gasstroms, um ein Gleichgewicht zwischen der für die Verbrennungsreaktion notwendigen Sauerstoffversorgung und der Reduktion der NOx, die im Ofen (4) erzeugt werden, zu erhalten.

7. Verfahren nach Anspruch 6, bei dem der alternative feste Brennstoff ein fester Brennstoff ist, umfassend Partikel mit einer charakteristischen Abmessung von mehr als 20 mm.

8. Verfahren nach Anspruch 6, bei dem der alternative feste Brennstoff ein fester Brennstoff ist, umfassend Partikel mit einer charakteristischen Abmessung von mehr als 80 mm.

## Claims

1. A facility (1) for producing clinker comprising:
- a preheating assembly (2), wherein raw material is preheated;
- a calcination assembly (3), wherein the preheated raw material is at least partly decarbonated;
- an oven (4) wherein the preheated raw and at least partly decarbonated material is cured;
- a cooler (5) wherein the cured material from the oven is cooled by the cooling air; in which facility the calcination assembly comprises a calcination reactor (8) suitable for combusting a so-called solid fuel alternative to fossil fuels, in particular materials that are waste or even biomass, the calcination reactor (8) being disposed, according to the flow direction of the gases, between on the one hand the preheating assembly (2) and on the other hand the oven (4), and being connected to the cooler (5) such that:
- at least part of the oven (4) combustion fumes at least partly crosses the calcination reactor (8) before entering the preheating assembly (2),
- a tertiary gas flow at least partly comprising air exiting the cooler (5) at least partly crosses the calcination reactor (8) before entering the preheating assembly (2),
and wherein the calcination reactor (8) comprises a system for adjusting the dwell time of the alternative solid fuel in the calcination reactor (8),
the facility comprising a system (13) for adjusting the tertiary flow rate configured to ensure, in the calcination reactor (8), a balance between the supply of oxygen necessary for the combustion reaction, and the reduction of the NOx produced in the oven (4).

2. The facility (1) according to claim 1, wherein the calcination reactor (8) is a rotary oven, the system for adjusting the dwell time of the alternative solid fuel being a system for adjusting the rotation speed and/or the slope of the calcination reactor (8).

3. The facility (1) according to any one of the preceding claims, wherein the preheating assembly (2) comprises at least one cyclone preheater.

4. The facility according to any one of the preceding claims, wherein the calcination assembly (3) further comprises an additional calcination reactor (10) supplied with a fuel, the additional calcination reactor (10) being disposed between the calcination reactor (8) and the preheating assembly (2) according to the flow direction of the gases, such that at least part of the fumes exiting the calcination reactor (8) crosses the additional calcination reactor (10) before entering the preheating assembly (2).

5. The facility (1) according to any one of the preceding claims, wherein the calcination assembly (3) comprises in addition an auxiliary calcination reactor (11), supplied with a fuel, the auxiliary reactor (11) being connected to the cooler (5) upstream of the calcination reactor (8) according to the flow direction of the gases, such that the tertiary gas flow supplying the calcination reactor (8) comprises at least part of the fumes exiting the auxiliary reactor (11).

6. A method for producing clinker in a facility (1) according to any one of the preceding claims, the method comprising:
- preheating the raw material in the preheating assembly (2);
- decarbonating the preheated material in the calcination assembly (3);
- curing the preheated and decarbonated material in the oven (4);
- cooling the cured material in the cooler, the cooling being carried out using cooling air;
the method further comprising:
- supplying the calcination reactor (8) with at least part of the fumes from the oven (4) and with a tertiary gas flow comprising at least part of the cooling air exiting the cooler (5);
- combusting an alternative solid fuel in the calcination reactor (8) and adjusting the dwell time of the alternative solid fuel in the calcination reactor (8);
- recovering the fumes from the calcination reactor (8) to supply the preheating assembly (2)
- controlling the tertiary gas flow arriving at the calcination reactor (8) such as to obtain a balance between the supply of oxygen necessary for the combustion reaction, and the reduction of NOx produced in the oven (4).

7. The method according to claim 6 wherein the alternative solid fuel is a solid fuel comprising particles a characteristic dimension of which is higher than 20 mm.

8. The method according to claim 6 wherein the alternative solid fuel is a solid fuel comprising particles a characteristic dimension of which is higher than 80 mm.
